# FASCICULE DE BREVET EUROPEEN

(11) **EP 4 526 843 B1**
(45) Date de publication et mention de la délivrance du brevet: **05.11.2025**
(21) Numéro de dépôt: 24732742.2
(22) Date de dépôt: 24.05.2024
(51) Int. Cl.: G06T 7/70

(54) **PROCÉDÉ ET DISPOSITIF DE DÉTERMINATION DE POSE ABSOLUE D'UNE CAMÉRA EMBARQUÉE DANS UN ENGIN AÉRIEN OU SPATIAL**
VERFAHREN UND VORRICHTUNG ZUR BESTIMMUNG DER ABSOLUTEN POSE EINER KAMERA AN BORD EINES LUFT- ODER RAUMFAHRZEUGES
METHOD AND DEVICE FOR DETERMINING THE ABSOLUTE POSITION OF AN ON-BOARD CAMERA IN AN AIRCRAFT OR SPACECRAFT

(30) Priorité: 24.05.2023 FR 2305008
(43) Date de publication de la demande: 26.03.2025
(73) Titulaire: Airbus Defence and Space SAS, 31402 Toulouse Cedex 4 (FR); Airbus Helicopters, 13725 Marignane Cedex (FR)
(72) Inventeur: BROCHARD, Roland, 31402 Toulouse CEDEX 4 (FR)
(74) Mandataire: Plasseraud IP
(86) Numéro de dépôt international: PCT/FR2024/050665
(87) Numéro de publication internationale: WO 2024/241017

(56) Documents cités:
- NAGY BAL�ZS ET AL: "On-the-Fly Camera and Lidar Calibration", REMOTE SENSING (BASEL, SWITZERLAND), vol. 12, no. 7, 2 April 2020 (2020-04-02), Basel, pages 1137, XP93136328, ISSN: 2072-4292, Retrieved from the Internet <URL:https://pdfs.semanticscholar.org/3c07/e904d462456332d933407dc955362474112d.pdf> DOI: 10.3390/rs12071137
- PINTUS RUGGERO ET AL: "A Fast and Robust Framework for Semi-Automatic and Automatic Registration of Photographs to 3D Geometry", 1 January 2015 (2015-01-01), pages 1 - 23, XP093136300, Retrieved from the Internet <URL:http://www.crs4.it/vic/data/papers/jocch2015-3d2d_registration.pdf> [retrieved on 20240229]
- BOPCHE LITESH ET AL: "Use of noise reduction filters on stereo images for improving the accuracy and quality of the digital elevation model", JOURNAL OF APPLIED REMOTE SENSING, SOCIETY OF PHOTO-OPTICAL INSTRUMENTATION ENGINEERS, 1000 20TH ST. BELLINGHAM WA 98225-6705 USA, vol. 15, no. 1, 1 January 2021 (2021-01-01), pages 14508, XP060139404, ISSN: 1931-3195, [retrieved on 20210218], DOI: 10.1117/1.JRS.15.014508
- NAGY BALÁZS ET AL: "On-the-Fly Camera and Lidar Calibration", REMOTE SENSING, vol. 12, no. 7, 2 April 2020 (2020-04-02), CH, pages 1137, XP093136328, ISSN: 2072-4292, Retrieved from the Internet <URL:https://pdfs.semanticscholar.org/3c07/e904d462456332d933407dc955362474112d.pdf> DOI: 10.3390/rs12071137

## Description

### Domaine technique

La présente invention appartient au domaine général de la navigation basée vision (« Vision-Based-Navigation », VBN, dans la littérature anglo-saxonne), et concerne plus particulièrement un procédé de détermination d'une pose absolue, dans un repère de référence, d'une caméra embarquée dans un engin aérien ou spatial.

### Etat de la technique

Dans les systèmes de navigation basée vision, il est notamment connu d'acquérir une image d'une scène, au moyen d'une caméra embarquée dans un engin mobile par rapport à cette scène, et de comparer cette image à une image de référence de ladite scène. Cette comparaison vise à recaler l'image acquise par la caméra avec l'image de référence, c'est à dire à retrouver et à repositionner l'image acquise dans l'image de référence. L'image de référence étant géoréférencée, il est alors possible déterminer la position de la caméra, et donc celle l'engin qui l'embarque, par rapport à la scène.

Toutefois, de nombreux facteurs peuvent affecter la précision de la détermination de la position de l'engin.

Par exemple, si l'image de référence est généralement une image acquise dans de bonnes conditions d'observation, par exemple en l'absence de nuages et/ou avec une scène globalement éclairée par le Soleil (en particulier dans le cas d'une image de référence acquise dans des longueurs d'ondes visibles), cela n'est pas nécessairement le cas pour l'image acquise par la caméra embarquée dans l'engin dont on cherche à déterminer la position. Si l'image est acquise par la caméra embarquée dans l'engin aérien ou spatial alors que la scène est en partie masquée par des nuages et/ou est peu éclairée par le Soleil, alors la comparaison avec l'image de référence pourra s'avérer compliquée, ce qui pourra entrainer des erreurs non négligeables sur la détermination de la position de l'engin par rapport à la scène.

En outre, la scène elle-même peut être soumise à des variations saisonnières. Ainsi, si l'image de référence représente la scène en été et si l'engin survole cette même scène en hiver, la comparaison de l'image de référence avec l'image acquise par la caméra embarquée dans cet engin pourra s'avérer compliquée.

La publication "A Fast and Robust Framework for Semi-Automatic and Automatic Registration of Photographs to 3D Geometry", Pintus Ruggero et al., ACM J. Computing Cultural Heritage, divulgue l'alignement de photographies 2D à partir d'une géométrie 3D connue d'une scène.

La publication "On-the-Fly Camera and Lidar Calibration", Nagy Balázs et al., Remote Sensing, vol. 12, no. 7, divulgue la génération d'un nuage de points 3D en temps réel à partir d'une caméra 2D et de données lidar.

La publication "Use of noise reduction filters on stereo images for improving the accuracy and quality of the digital elevation model", Bopche Litesh et al., Journal of Applied Remote Sensing, vol. 15, no. 1, divulgue une méthode pour améliorer la qualité des modèles 3D de terrains obtenus à partir d'images 2D stéréoscopiques.

### Exposé de l'invention

La présente invention a pour objectif de remédier à tout ou partie des inconvénients de l'art antérieur, notamment ceux exposés ci-avant, en proposant une solution de navigation basée vision qui soit robuste aux variations des conditions d'observation de la scène et aux variations saisonnières.

À cet effet, et selon un premier aspect, il est proposé un procédé (20) temps réel de détermination d'une pose absolue d'une caméra (11) dans un repère de référence, ladite caméra (11) étant monoculaire et passive, et étant embarquée dans un engin (10) aérien ou spatial mobile par rapport à une scène connue et cartographiée sous la forme d'un modèle 3D de référence, ledit procédé comportant :
- une obtention (S20) d'une séquence d'au moins deux images consécutives acquises par la caméra (11) à des instants respectifs consécutifs, chaque image comportant une pluralité de pixels, chaque pixel d'une image représentant partiellement la scène vue par la caméra au moment de l'acquisition de ladite image,
- une détermination (S21), à partir de la séquence d'images, d'un modèle 3D local dans un repère centré et orienté par rapport à la caméra (11), ledit modèle 3D local représentant une partie de la scène en trois dimensions correspondant à l'acquisition d'une image dite cible parmi la séquence d'images, la détermination (S21) du modèle 3D local comportant une mise en correspondance dense (S211) de tous les pixels de l'image cible avec des pixels d'autres images parmi ladite séquence,
- une fourniture (S220) d'une pose absolue approximative de la caméra,
- une détermination de la pose absolue de la caméra (11) au moment de l'acquisition de l'image cible, par recalage en position et en attitude du modèle 3D local avec le modèle 3D de référence, le recalage en position et en attitude étant réalisé dans un domaine de recherche, à partir de la pose absolue approximative de la caméra.

Le procédé proposé vise donc à déterminer la pose absolue de la caméra dans le repère de référence d'une cartographie 3D. Par « pose absolue », on entend la pose (position et attitude) de la caméra dans ce repère de référence. Avantageusement l'invention permet une utilisation du procédé de détermination de pose absolue pour de la navigation basée vision et notamment en temps réel. La pose absolue est à distinguer de la « pose relative » de la caméra, qui correspond à la pose de la caméra dans un repère arbitraire qui correspond par exemple à un repère de la caméra à l'instant d'acquisition d'une image précédente de la séquence (auquel cas la pose relative correspond à la variation de pose de la caméra entre deux instants d'acquisition d'images).

Plusieurs images acquises par la caméra sont utilisées pour déterminer un modèle 3D local de la scène. Il est à noter que l'on considère ici une caméra de type passif (c'est-à-dire qui se contente de mesurer de manière passive un rayonnement électromagnétique provenant de la scène, contrairement par exemple aux lidars ou radars qui mesurent de manière active en émettant un rayonnement électromagnétique en direction de la scène et en mesurant le rayonnement électromagnétique réfléchi par ladite scène). En outre, la caméra étant monoculaire, il s'agit donc d'une seule caméra qui est utilisée pour acquérir la séquence d'images, qui sont donc acquises à des instants différents par la même caméra (système de vision monoculaire) qui s'est en principe déplacée entre deux instants d'acquisition et observe donc la scène depuis des points de vue en principe différents.

En outre, il est à noter que l'on entend ici par « modèle 3D » une représentation de la géométrie 3D de la scène, et que tout type de représentation de la géométrie 3D peut être considéré dans la présente divulgation. Un tel modèle 3D peut donc se présenter, par exemple, sous la forme d'un simple Modèle Numérique d'Elévation, MNE (« Digital Elevation Model », DEM, dans la littérature anglo-saxonne, parfois désigné par modèle « pseudo 3D » ou « 2.5D »), ou sous une forme plus complexe permettant de représenter dans l'espace l'enveloppe extérieure du volume formé par la scène (par exemple un maillage constitué de sommets, d'arêtes et de surfaces polygonales).

Etant donné que le modèle 3D de référence est établi dans le repère de référence, le fait de recaler (en position et en attitude) le modèle 3D local par rapport au modèle 3D de référence permet de déterminer la pose absolue de la caméra dans le repère de référence, c'est-à-dire déterminer à la fois la position et l'attitude de ladite caméra dans ledit repère de référence.

En outre, on s'intéresse essentiellement à la géométrie 3D de la scène, qui est indépendante des conditions d'observation de la scène et qui varie en principe peu avec les variations saisonnières. De même, la géométrie 3D de la scène ne dépend pas du type de caractéristiques physiques mesurées de la scène. Par exemple, un modèle 3D de référence établi à partir de mesures (actives ou passives) effectuées dans des longueurs d'ondes visibles peut tout à fait être utilisé pour déterminer la pose absolue d'une caméra de type passif mesurant le rayonnement électromagnétique dans des longueurs d'ondes infrarouges.

La présente divulgation propose donc une solution de navigation basée vision, et donc notamment utilisable en temps réel, qui est avantageusement applicable quel que soit le type de caméra utilisée pour la navigation. En effet, puisque les images acquises par cette caméra sont utilisées pour déterminer un modèle 3D local qui représente la géométrie 3D de la scène (et non le rayonnement électromagnétique issu de la scène dans une bande particulière de longueurs d'ondes), le même modèle 3D de référence peut être utilisé pour déterminer la pose absolue de tout type de caméra utilisée pour la navigation.

Dans des modes particuliers de mise en œuvre, le procédé de détermination peut comporter en outre, de manière optionnelle, l'une ou plusieurs des caractéristiques suivantes, prises isolément ou selon toutes les combinaisons techniquement possibles.

Dans des modes particuliers de mise en œuvre, la détermination du modèle 3D local comprend une détermination d'au moins une pose relative de la caméra pour plusieurs images consécutives de la séquence.

Dans des modes particuliers de mise en œuvre, la détermination de ladite pose relative de la caméra pour lesdites plusieurs images consécutives de la séquence comportant une odométrie visuelle, suivie d'une actualisation de ladite pose relative par ajustement de faisceaux.

Dans des modes particuliers de mise en œuvre, la détermination du modèle 3D local comporte :
- la détermination de poses relatives de la caméra pour lesdites plusieurs images consécutives de la séquence, suivie de
- ladite mise en correspondance dense de tous les pixels de l'image cible avec des pixels desdites plusieurs images consécutives de la séquence,
- pour chaque pixel de l'image cible effectivement mis en correspondance : une détermination d'une position 3D du pixel de l'image cible, dans le repère de la caméra, en fonction des poses relatives, de la position 2D dudit pixel dans l'image cible et des positions 2D de chaque pixel mis en correspondance,
dans lequel le modèle 3D local est formé à partir des positions 3D des pixels effectivement mis en correspondance de l'image cible.

Dans des modes particuliers de mise en œuvre, la mise en correspondance dense des pixels de l'image cible avec les pixels des autres images consécutives de la séquence comporte, pour chaque autre image parmi les autres images consécutives de la séquence :
- une détermination, à partir des poses relatives respectives d'une transformation de recalage entre l'image cible et ladite autre image ,
- un recalage, au moyen de la transformation de recalage, de ladite autre image,
- une détermination du résidu de mouvement de l'image cible vers ladite autre image recalée.

Dans des modes particuliers de mise en œuvre, la transformation de recalage est une homographie.

Dans des modes particuliers de mise en œuvre, la détermination du résidu de mouvement de l'image cible et de ladite autre image recalée, met en œuvre un algorithme de flot optique dense.

Dans des modes particuliers de mise en œuvre, la détermination de la pose absolue de la caméra au moment de l'acquisition de l'image cible comporte :
- une projection du modèle 3D local vers le repère de référence, en fonction de la pose absolue approximative,
- une mise en correspondance, dans le repère de référence, du modèle 3D local projeté avec le modèle 3D de référence.

Dans des modes particuliers de mise en œuvre, la pose absolue approximative est déterminée à partir d'une pose absolue déterminée pour la caméra lors d'une acquisition d'une image cible précédente ou à partir d'un instrument de navigation embarqué dans l'engin aérien ou spatial.

Dans des modes particuliers de mise en œuvre, le modèle 3D local et le modèle 3D de référence sont filtrés au moyen d'un filtre passe-haut avant de déterminer la pose absolue de la caméra.

Dans des modes particuliers de mise en œuvre, les images de la séquence d'images obtenues correspondent à des images dites clés sélectionnées parmi une séquence glissante d'images dites initiales acquises successivement par la caméra.

Dans des modes particuliers de mise en œuvre, une image initiale est sélectionnée en tant qu'image clé lorsqu'un critère prédéterminé de déplacement de l'engin aérien ou spatial depuis l'acquisition de l'image clé précédente est vérifié.

Dans des modes particuliers de mise en œuvre, la caméra est sensible dans des longueurs d'ondes visibles et/ou infrarouges.

Selon un deuxième aspect, il est proposé un procédé temps réel de navigation à vue utilisant une caméra monoculaire et passive et reliée à une plateforme d'un engin aérien ou spatial mobile par rapport à une scène connue et cartographiée sous la forme d'un modèle 3D de référence, comprenant :
- une détermination d'une pose absolue de la caméra dans le repère de référence, par le procédé selon le premier aspect,
- une détermination des position et attitude de l'engin aérien ou spatial, dans le modèle 3D de référence, en fonction de la pose absolue modifiée en fonction d'une position de la caméra par rapport à la plateforme de l'engin aérien ou spatial.

Selon un troisième aspect, il est proposé un produit programme d'ordinateur comportant des instructions qui, lorsqu'elles sont exécutées par au moins un processeur, configurent ledit au moins un processeur pour mettre en œuvre un procédé selon l'un quelconque des aspects et/ou modes de mise en œuvre de la présente divulgation.

Selon un quatrième aspect, il est proposé un dispositif de calcul comportant au moins un processeur et au moins une mémoire, ledit au moins processeur étant configuré pour mettre en œuvre un procédé selon l'un quelconque des aspects et/ou modes de mise en œuvre de la présente divulgation.

Selon un cinquième aspect, il est proposé un engin aérien ou spatial, comportant une plateforme portant une caméra et un dispositif de calcul selon l'un quelconque des modes de réalisation de la présente divulgation. Il est à noter qu'on entend par engin spatial tout engin évoluant en dehors de l'atmosphère de la Terre, y compris un engin évoluant au sol sur un corps céleste autre que la Terre (satellite, navette spatiale, rover, etc.) ou survolant un tel corps céleste.

### Présentation des figures

L'invention sera mieux comprise à la lecture de la description suivante, donnée à titre d'exemple nullement limitatif, et faite en se référant aux figures qui représentent :
- [Fig. 1] Figure 1 : une représentation schématique d'un exemple d'engin embarquant une caméra pour l'acquisition d'images d'une scène par rapport à laquelle l'engin est susceptible de se déplacer,
- [Fig. 2] Figure 2 : un diagramme illustrant les principales étapes d'un exemple de mise en œuvre d'un procédé de détermination d'une pose absolue de la caméra embarquée dans l'engin,
- [Fig. 3] Figure 3 : un diagramme illustrant les principales étapes d'un exemple de mise en œuvre d'une étape de détermination d'un modèle 3D local de la scène du procédé de détermination de pose absolue,
- [Fig. 4] Figure 4 : un diagramme illustrant les principales étapes d'un exemple de mise en œuvre d'une étape détermination de poses relatives de la caméra pour différentes images acquises par la caméra,
- [Fig. 5] Figure 5 : un diagramme illustrant les principales étapes d'un exemple de mise en œuvre d'une étape de mise en correspondance de pixels de l'étape de détermination du modèle 3D local de la scène,
- [Fig. 6] Figure 6 : une représentation schématique de pixels de deux images représentant de mêmes éléments d'une scène,
- [Fig. 7] Figure 7 : un diagramme illustrant les principales étapes d'un exemple de mise en œuvre pour la détermination de pose absolue,
- [Fig. 8] Figure 8 : une représentation schématique d'un exemple de modèle 3D local avant et après un filtrage passe-haut.

Dans ces figures, des références identiques d'une figure à une autre désignent des éléments identiques ou analogues. Pour des raisons de clarté, les éléments représentés ne sont pas à l'échelle, sauf mention contraire.

En outre, l'ordre des étapes indiqué sur ces figures est donné uniquement à titre d'exemple non limitatif de la présente divulgation qui peut être appliquée avec les mêmes étapes exécutées dans un ordre différent.

### Description des modes de réalisation

Tel qu'indiqué ci-dessus, la présente invention concerne un procédé 20 de détermination d'une pose absolue d'une caméra 11 dans un repère de référence, la caméra 11 étant embarquée dans un engin 10 aérien ou spatial mobile par rapport à une scène. Il est à noter qu'on entend par engin « spatial » tout engin évoluant en dehors de l'atmosphère de la Terre, y compris un engin évoluant au sol sur un corps céleste autre que la Terre (satellite, navette spatiale, rover, etc.). Un engin aérien peut être tout engin volant dans l'atmosphère de la Terre (avion, hélicoptère, drone, etc.).

Par « pose absolue », on entend la pose de la caméra 11 dans le repère de référence considéré, c'est-à-dire la position (3D) et l'attitude (orientation) de ladite caméra 11 dans ce repère de référence.

La caméra est de préférence calibrée, ce qui offre de meilleures garanties de précision et de reproductibilité.

Concernant la mesure du positionnement de la caméra par rapport à la plateforme de l'engin (10) aérien ou spatial, on utilise par exemple un repère lié à un ou plusieurs autres senseurs, en particulier la centrale inertielle (IMU) ou le GPS. Une calibration inter-senseurs se fait par exemple en effectuant des mesures simultanées de tous les senseurs et en estimant les transformations géométriques qui permettent de superposer de façon optimum ces différentes mesures. Généralement on effectue, par exemple, des manœuvres adaptées pour maximiser l'observabilité sur tous les senseurs.

De préférence, on a un ensemble monobloc séparable de la plateforme et intégrant plusieurs senseurs fixes les uns par rapport aux autres. On pourra alors orienter l'ensemble monobloc manuellement dans de multiples directions et en observant des objets lointains tels que des bâtiments, l'horizon ou le sol vu du haut d'un bâtiment.

Le repère de référence peut être de tout type adapté à repérer la position et l'attitude de la caméra 11 dans un espace de dimension trois et est typiquement défini par une origine et par trois axes non coplanaires, par exemple orthogonaux. Dans certains cas, le repère de référence considéré dépend de la scène survolée. Par exemple, si la scène survolée est une scène à la surface de la Terre, le repère de référence peut être un repère géocentrique ou un repère ayant pour origine un point particulier à la surface de la Terre. Si l'engin 10 survole un autre type de corps céleste, par exemple une autre planète ou un astéroïde, le repère de référence est par exemple centré sur ce corps céleste ou sur un point particulier à la surface de ce corps céleste.

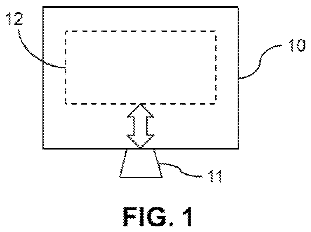

La figure 1 représente schématiquement un exemple de réalisation d'un engin 10 spatial ou aérien. Tel qu'illustré par la figure 1, l'engin 10 comporte la caméra 11 et un dispositif de calcul 12.

La caméra 11 peut être de tout type adapté à acquérir des images à deux dimensions (2D) de la scène, de manière passive (c'est-à-dire qui se contente de mesurer un rayonnement électromagnétique issu de la scène, sans émettre préalablement en direction de celle-ci un rayonnement électromagnétique). La caméra 11 est configurée pour mesurer un rayonnement électromagnétique dans une ou plusieurs bandes de longueurs déterminées. Par exemple, la caméra 11 est configurée pour mesurer un rayonnement électromagnétique dans des longueurs d'ondes visibles, c'est-à-dire des longueurs d'ondes comprises entre 380 nanomètres (nm) et 780 nm. Alternativement ou en complément, la caméra 11 peut être configurée pour mesurer un rayonnement électromagnétique dans des longueurs d'ondes infrarouges, c'est-à-dire des longueurs d'ondes comprises entre 780 nm et 5 millimètres (mm). Par exemple, la caméra 11 est sensible en infrarouge proche (« Near Infrared », NIR, dans la littérature anglo-saxonne, c'est-à-dire dans des longueurs d'ondes comprises entre 780 nm et 3 micromètres (µm)) et/ou en infrarouge moyen (« Mid Infrared », MIR, dans la littérature anglo-saxonne, c'est-à-dire dans des longueurs d'ondes comprises entre 3 µm et 50 µm).

Les images acquises par la caméra 11 se présentent par exemple sous la forme d'une matrice de pixels fournissant une information physique sur la zone de la scène placée dans le champ de vue de la caméra 11. Les images sont par exemple des matrices de *Nₓ* × *N_{y}* pixels, *Nₓ* et *N_{y}* étant par exemple chacun de l'ordre de quelques centaines à quelques dizaines de milliers de pixels. Les images sont typiquement acquises de manière récurrente par la caméra 11, par exemple de manière périodique avec une fréquence qui est par exemple de l'ordre de quelques Hertz (Hz) à quelques centaines de Hz.

Il est à noter qu'un système de vision monoculaire (par opposition notamment à stéréoscopique), comprenant une seule caméra 11, suffit pour la mise en œuvre du procédé 20 de détermination de pose absolue. La caméra 11 est mise en œuvre pour acquérir une séquence d'images de la scène, qui sont donc acquises à des instants différents par la même caméra (système de vision monoculaire) qui s'est en principe déplacée entre deux instants d'acquisition et observe donc la scène depuis des points de vue en principe différents.

Il est à noter que l'engin 10 peut comporter d'autres senseurs de vision que la caméra 11, mais la présente invention permet de déterminer la pose absolue de la caméra dans le repère de référence à partir d'images acquises par la seule caméra 11.

Le dispositif de calcul 12 est configuré pour mettre en œuvre tout ou partie des étapes du procédé 20 de détermination de la pose absolue de la caméra 11. Dans l'exemple non limitatif illustré par la figure 1, le dispositif de calcul 12 est embarqué dans l'engin 10 spatial ou aérien. Il est cependant possible, dans d'autres exemples, d'avoir un dispositif de calcul 12 qui n'est pas embarqué dans l'engin 10 et qui est distant dudit engin 10. Le cas échéant, les images acquises par la caméra 11 peuvent être transmises au dispositif de calcul 12, puis des informations relatives à la pose absolue de la caméra peuvent être transmises en retour, par tout type de moyen de communication adapté.

Le dispositif de calcul 12 comporte par exemple un ou plusieurs processeurs (CPU, DSP, GPU, FPGA, ASIC, etc.). Dans le cas de plusieurs processeurs, ceux-ci peuvent être intégrés dans un même équipement et/ou intégrés dans des équipements matériellement distincts. Le dispositif de calcul 12 comporte également une ou plusieurs mémoires (disque dur magnétique, mémoire électronique, disque optique, etc.) dans lesquelles est par exemple mémorisé un produit programme d'ordinateur, sous la forme d'un ensemble d'instructions de code de programme à exécuter par le ou les processeurs pour mettre en œuvre tout ou partie des étapes du procédé 20 de détermination de la pose absolue de la caméra 11.

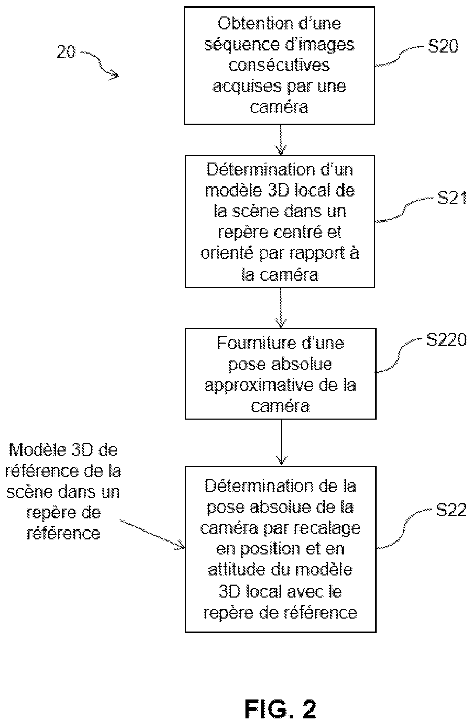

La figure 2 représente schématiquement les principales étapes d'un procédé 20 de détermination de la pose absolue de la caméra 11 dans le repère de référence. Il est à noter que, la position et l'orientation de la caméra 11 par rapport à l'engin 10 qui l'embarque étant connue ou déterminable à tout instant, la pose absolue de la caméra 11 dans le repère de référence peut par exemple être utilisée pour déterminer la pose absolue de l'engin 10 spatial ou aérien dans le repère de référence, par exemple à des fins de navigation basée vision, éventuellement en combinaison avec des mesures de navigation fournies par des senseurs de navigation (récepteur GPS, accéléromètre, odomètre, gyroscope, etc.) éventuellement embarqués dans l'engin 10.

Tel qu'illustré par la figure 2, le procédé 20 de détermination de pose absolue comporte une étape S20 d'obtention d'une séquence d'images de ladite scène. La séquence d'images obtenues au cours de l'étape S20 sont des images acquises par la caméra 11 à des instants respectifs consécutifs et sont donc susceptibles de représenter la scène depuis des points de vue différents. Par exemple, la séquence d'images obtenues au cours de l'étape S20 comporte un nombre *N_{C}* prédéterminé d'images, avec *N_{C}* ≥ 2. De préférence, *N_{C}* ≥ 3 ou *N_{C}* ≥ 5. Par exemple, 6 ≤ *N_{C}* ≤ 10. Il importe en effet de suivre les pixels afin de mesurer des écarts significatifs, qui correspondent à un mouvement, pour améliorer la précision de la perception 3D. Toutefois, plus l'écart est grand d'une image à l'autre, plus il est difficile de suivre précisément les pixels. C'est pourquoi il peut s'avérer avantageux d'utiliser des images intermédiaires afin de suivre les pixels en passant par les images intermédiaires.

Suivant un premier exemple, il est possible d'utiliser toutes les images acquises successivement (par exemple de manière périodique) par la caméra 11, de sorte que la séquence d'images obtenues correspond à *N_{C}* images acquises successivement par la caméra 11.

Suivant un autre exemple, il est possible de ne pas utiliser, pour déterminer la pose absolue de la caméra 11, toutes les images acquises par ladite caméra. Si l'on désigne par « images initiales » toutes les images acquises successivement par la caméra, alors les *N_{C}* images obtenues au cours de l'étape S20, désignées ci-après par « images clés », sont des images sélectionnées parmi les images initiales acquises successivement par la caméra 11.

De manière générale, une telle sélection d'images clés, qui revient à écarter certaines images initiales, vise à essayer d'augmenter la probabilité d'obtenir une séquence d'images clés représentant la scène depuis des points de vue qui sont effectivement différents. En effet, l'écart temporel entre les instants d'acquisition de deux images initiales successives pouvant être faible, la variation de point de vue peut parfois être négligeable entre deux images initiales successives, et cela peut en outre dépendre du mouvement de l'engin 10 par rapport à la scène. Par exemple, il est possible de sélectionner, en tant qu'image clé, une image initiale toutes les *n_{C}* images initiales. Dans ce cas, si les images initiales sont acquises à une période *T_{I},* alors les images clés sont acquises à une période *n_{C}* · *T_{I}, n_{C}* étant par exemple égal ou supérieur à 10, ou par exemple égale ou supérieur à 100.

Suivant un autre exemple, la sélection peut mettre en œuvre un critère prédéterminé de déplacement de l'engin 10 depuis l'acquisition de l'image clé précédente, et une image initiale est sélectionnée en tant qu'image clé lorsque ce critère de déplacement est vérifié. L'évaluation du déplacement de l'engin 10, même approximative, peut mettre en œuvre toute méthode connue de la personne du métier. Par exemple, il est possible d'utiliser une estimation du déplacement de l'engin 10 fournie par un filtre de navigation, ou des mesures fournies par une centrale inertielle de l'engin 10, pour évaluer si le critère de déplacement est vérifié (c'est-à-dire si le déplacement estimé est supérieur à un déplacement minimal requis). Dans des modes préférés de mise en œuvre, l'évaluation du déplacement s'effectue à partir du contenu des images initiales. Par exemple, à partir d'une image clé donnée (la première image clé pouvant être choisie de manière arbitraire), il est possible de comparer le contenu d'une image initiale avec le contenu de cette image clé. Si les contenus de l'image initiale et de l'image clé considérées sont sensiblement différents, cela signifie que l'engin 10 s'est déplacé et l'image initiale considérée peut être sélectionnée comme autre image clé. Par exemple, il est possible d'identifier des vignettes caractéristiques (une vignette caractéristique correspondant à un ensemble de pixels représentant un élément caractéristique de la scène) dans l'image clé considérée et de poursuivre ces vignettes caractéristiques dans les images initiales suivantes (« tracking » dans la littérature anglo-saxonne). Le cas échéant, le critère de déplacement est par exemple considéré comme vérifié si un pourcentage prédéterminé de vignettes de référence n'ont pas pu être poursuivies dans l'image initiale considérée.

Dans la suite de la description, on considère une séquence d'images consécutives, prête à être traitée, pouvant par exemple être constituée d'images clés.

L'une de ces images, parmi la séquence d'images obtenues au cours de l'étape S20, est désignée par « image cible », et correspond à l'image par rapport à laquelle la pose absolue de la caméra 11 doit être déterminée. En d'autres termes, la pose absolue à déterminer correspond à la pose absolue au moment de l'acquisition de l'image cible. L'image cible peut être l'une quelconque des images parmi la séquence d'images. De préférence, l'image cible correspond à l'image acquise en dernier de la séquence, c'est-à-dire celle dont l'instant d'acquisition est le moins ancien.

Afin de déterminer des poses absolues successives de la caméra 11, il est par exemple possible de considérer une séquence glissante d'images. Par exemple, la séquence d'images (c'est-à-dire les *N_{C}* images formant la séquence d'images) utilisée précédemment pour déterminer la pose absolue de la caméra 11 peut être mise à jour au cours de l'étape S20 en supprimant de cette séquence l'image la plus ancienne et en ajoutant dans cette séquence une nouvelle image qui vient d'être sélectionnée parmi les dernières images initiales acquises par la caméra 11.

Tel qu'illustré par la figure 2, le procédé 20 de détermination de pose absolue comporte une étape S21 de détermination, à partir de la séquence d'images, d'un modèle 3D local. Le modèle 3D local représente la géométrie 3D d'une partie de la scène telle que vue par la caméra 11 au moment de l'acquisition de l'image cible. Le modèle 3D local représente la géométrie 3D cette partie de la scène dans un repère de la caméra 11, c'est-à-dire dans un repère dont l'origine et l'orientation sont définis par rapport à la caméra 11 (et qui est différent du repère de référence considéré).

Ainsi, la séquence d'images, qui représentent partiellement la scène vue depuis des points de vue différents, est utilisée pour reconstruire la géométrie 3D de cette partie de ladite scène. En supposant que l'essentiel des éléments constitutifs de la scène sont immobiles, les différentes images, acquises à des instants respectifs consécutifs et représentant la scène telle que vue depuis des points de vue respectifs différents, peuvent en effet être utilisées pour effectuer une reconstruction de la géométrie 3D d'une partie de la scène, visible au moment de l'acquisition de l'image cible, en mettant en œuvre des méthodes de reconstruction 3D multi-vues (reposant sur le principe de structure acquise à partir d'un mouvement, ou « Structure From Motion », SFM, dans la littérature anglo-saxonne). De manière générale, toute méthode de reconstruction 3D multi-vues connue de la personne du métier peut être mise en œuvre au cours de l'étape S21 de détermination du modèle 3D local, et le choix d'une méthode particulière ne constitue qu'une variante nullement limitative d'implémentation du procédé 20 de détermination.

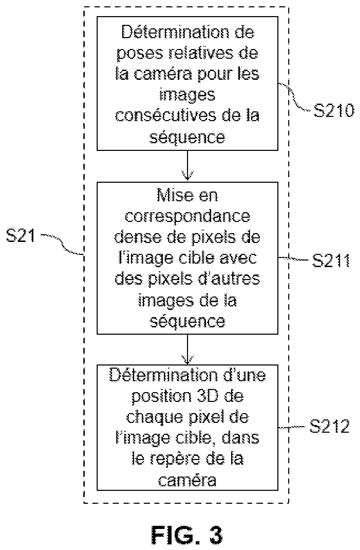

La figure 3 représente schématiquement les principales étapes d'un exemple de mise en œuvre de l'étape S21 de détermination du modèle 3D local de la scène dans le repère de la caméra.

Tel qu'illustré par la figure 3, l'étape S21 de détermination du modèle 3D local comporte dans cet exemple une étape S210 de détermination d'une ou plusieurs poses relatives de la caméra 11 pour tout ou partie des image de la séquence d'images.

Tel qu'indiqué précédemment, la pose relative d'une image correspond à la pose de la caméra 11 dans un repère arbitraire, dont la position et/ou l'orientation dans le repère de référence ne sont pas connues a priori (ou du moins pas avec une précision suffisante). Par exemple, le repère arbitraire peut être le repère de la caméra 11 à l'instant d'acquisition d'une des images de la séquence. L'échelle est par exemple obtenue en recalant la trajectoire obtenue à partir des poses relatives de la caméra, recalée sur la trajectoire a priori, obtenue à l'aide ses poses absolues approximatives, fournies par exemple par une centrale inertielle. Le repère arbitraire peut également varier d'une image à une autre, par exemple s'il s'agit du repère de la caméra 11 à l'instant d'acquisition de l'image précédente dans la séquence d'images.

Par exemple, l'étape S210 de détermination d'une ou plusieurs poses relatives peut mettre en œuvre une méthode d'odométrie visuelle, qui permet par exemple de déterminer la variation de pose d'une image à une autre, par analyse du contenu des images.

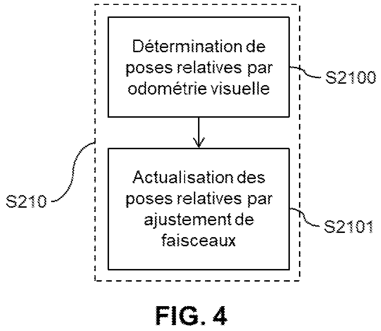

La figure 4 représente schématiquement les principales étapes d'un exemple de mise en œuvre de l'étape S210 de détermination des poses relatives de la caméra 11. Tel qu'illustré par la figure 4, l'étape S210 comporte :
- une étape S2100 de détermination des poses relatives de la caméra 11 pour tout ou partie des images de la séquence d'images par odométrie visuelle,
- une étape S2101 d'actualisation des poses relatives déterminées par ajustement de faisceaux.

Ainsi, dans cet exemple, les poses relatives sont déterminées en au moins deux temps.

Une première estimation des poses relatives est tout d'abord obtenue au cours de l'étape S2100 par odométrie visuelle, par exemple en poursuivant, d'une image à une autre, des pixels (ou vignettes de pixels) censés représenter des mêmes portions de la scène. Plusieurs pixels d'une même image sont respectivement mis en correspondance avec plusieurs pixels d'une ou plusieurs autres images de la séquence. Il est à noter que, dans certains exemples de mise en œuvre, cette étape S2100 de détermination des poses relatives de la caméra 11 peut être mise en œuvre pour déterminer la pose relative de la caméra 11 pour chaque image initiale acquise par ladite caméra 11.

Toutefois, dans certains cas, la précision des poses relatives déterminées par odométrie visuelle peut être limitée du fait d'un possible cumul d'erreurs (l'erreur commise sur la pose relative estimée pour une image peut se propager d'une image à une autre).

Suite à cette odométrie visuelle, on a par exemple des poses relatives estimées pour chacune des images de la séquence. Les coordonnées d'un pixel dans l'image caractérisent une ligne de visée, c'est-à-dire une demi droite dans l'espace 3D, partant du centre optique de la caméra et passant par le centre du pixel. Connaissant la pose de la caméra on peut replacer cette demi-droite dans le repère dans lequel la pose est exprimée.

L'étape S2101 d'actualisation par ajustement de faisceaux vise à améliorer la précision des poses relatives déterminées au cours de l'étape précédente S2100 utilisant l'odométrie visuelle.

L'ajustement de faisceaux part du principe que, pour deux images acquises par la caméra 11 à des instants d'acquisition différents, les lignes de visée, issues de la caméra 11 et associées à des pixels représentant la même portion de la scène dans les deux images, doivent se croiser au niveau de ladite même portion. Des pixels d'images différentes représentant une même portion de la scène sont dits « mis en correspondance ».

Au cours de l'étape S2101 d'actualisation par ajustement de faisceaux, les poses relatives sont actualisées pour faire en sorte que les lignes de visées associées à des pixels d'images différentes, mis en correspondance entre eux, se croisent sensiblement en une même portion (point), et ce pour plusieurs portions de la scène qui sont représentées dans plusieurs images. En pratique, il n'est généralement pas possible d'avoir des lignes de visée qui se croisent strictement, et on entend par « se croisent sensiblement » que lesdites lignes de visée sont au moins proches de se croiser.

Par exemple, il est possible d'utiliser un algorithme de Levenberg-Marquardt pour actualiser les poses relatives de la première image et de la dernière image de la séquence en utilisant une erreur épipolaire (en pixels) comme métrique. Cela permet de déterminer des positions 3D approximatives, dans un repère arbitraire, des portions de la scène identifiées comme visibles à la fois dans la première image et la dernière image de la séquence (les positions 3D approximatives correspondant aux coordonnées auxquelles les lignes de visée correspondantes se croisent sensiblement). Ensuite, les poses relatives des autres images de la séquence d'images peuvent être actualisées à partir de ces positions 3D approximatives au moyen d'un algorithme de résolution de problème de type Perspective-n-Point (PNP), par exemple la fonction SolvePnP de la librairie OpenCV.

Suite à l'ajustement de faisceaux, on a par exemple des poses relatives de la caméra déterminées pour chacune des images de la séquence.

Tel qu'illustré par la figure 3, la détermination du modèle 3D local comporte en outre, dans cet exemple, une étape S211 de mise en correspondance de pixels de l'image cible avec des pixels d'autres images parmi la séquence d'images. Tel qu'indiqué précédemment, des pixels mis en correspondance entre eux correspondent à des pixels d'images différentes qui sont considérés comme représentant une même portion (ou point) de la scène, qui est donc en principe vue depuis des points de vue différents. Il est à noter que la mise en correspondance effectuée au cours de l'étape S211 est avantageusement une mise en correspondance dite « dense », c'est-à-dire une mise en correspondance de tous les pixels de l'image cible avec des pixels d'autres images parmi la séquence d'images. Bien évidemment, il n'est pas toujours possible, pour un pixel donné de l'image cible, d'identifier un pixel d'une autre image représentant la même portion de la scène (puisque, l'engin 10 étant mobile, cette portion ne se trouvait pas nécessairement dans le champ de vue de la caméra 11 lors de l'acquisition de cette autre image). Toutefois, cette recherche de pixels correspondants dans les autres images est de préférence effectuée pour chaque pixel de l'image cible, afin d'identifier un grand nombre de portions de la scène visibles dans plusieurs images.

En particulier, si une mise en correspondance de pixels est effectuée au cours de l'étape S210 de détermination de poses relatives, celle-ci concerne un nombre de pixels beaucoup moins important que le nombre de pixels mis en correspondance au cours de l'étape S211 de mise en correspondance dense. De telles dispositions permettent d'améliorer la précision et la résolution du modèle 3D local et, in fine, d'améliorer la précision de la détermination de la pose absolue de la caméra 11. L'utilisation d'un ensemble réduit de points pour mesurer les poses permet une estimation rapide, compatible avec les contraintes d'un système temps réel, par exemple un système de navigation basée vision. Mais l'information géométrique qui permet, par la suite, la mise en correspondance avec la carte 3D ne peut être extraite de cet ensemble réduit de points. Ainsi l'information géométrique qui permet, par la suite, la mise en correspondance avec la carte 3D est obtenue grâce à l'étape suivante S211 de mise en correspondance dense de l'image cible avec des pixels desdites plusieurs images consécutives de la séquence. Il est à noter que tous ces traitements s'appliquent à un flux d'image de façon incrémentale : il n'est pas nécessaire d'avoir toutes les images pour commencer le traitement. Chaque nouvelle image permet d'obtenir des mesures supplémentaires mais n'est pas nécessaire pour les mesures antérieures.

L'étape S211 de mise en correspondance peut mettre en œuvre toute méthode de mise en correspondance dense connue de la personne du métier, le choix d'une méthode particulière ne constituant qu'une variante nullement limitative d'implémentation pour la détermination du modèle 3D local. Par exemple, l'étape S211 de mise en correspondance peut mettre en œuvre un algorithme de flot optique dense. Après la mise en correspondance des pixels de l'image cible avec des pixels d'autres images de la séquence, on a des pixels de l'image cible effectivement associés chacun à un ou respectivement plusieurs pixels d'une ou respectivement plusieurs autres images de la séquence.

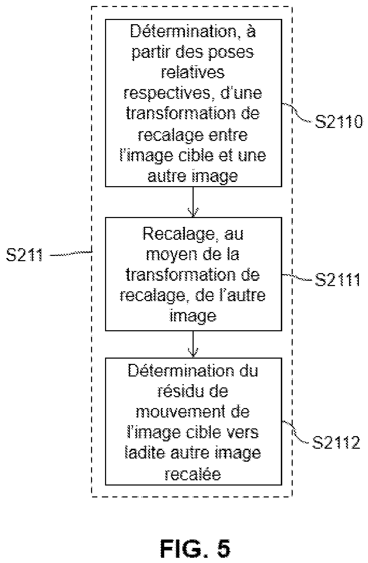

La figure 5 représente schématiquement les étapes principales d'un exemple de mise en œuvre de l'étape de mise en correspondance des pixels de l'image cible avec des pixels d'autres images de la séquence. Dans cet exemple, on utilise les poses relatives déterminées au cours de l'étape de détermination de poses relatives.

Par exemple, pour la mise en correspondance des pixels de l'image cible avec les pixels d'une autre image parmi la séquence d'images, il est possible de déterminer, au cours d'une étape S2110, une transformation de recalage entre l'image cible et cette autre image, à partir des poses relatives pour ces deux images. La transformation de recalage vise à ramener l'image cible et cette autre image dans des géométries d'acquisition proches, par exemple en ramenant cette autre image dans une géométrie d'acquisition proche de celle de l'image cible (ou inversement). Par exemple, la transformation de recalage permet de prédire le pixel de l'autre image représentant théoriquement la même portion de la scène. En effet, les positions des pixels représentant une même portion de la scène peuvent varier d'une image à une autre du fait notamment du changement de pose de la caméra 11 par rapport à la scène.

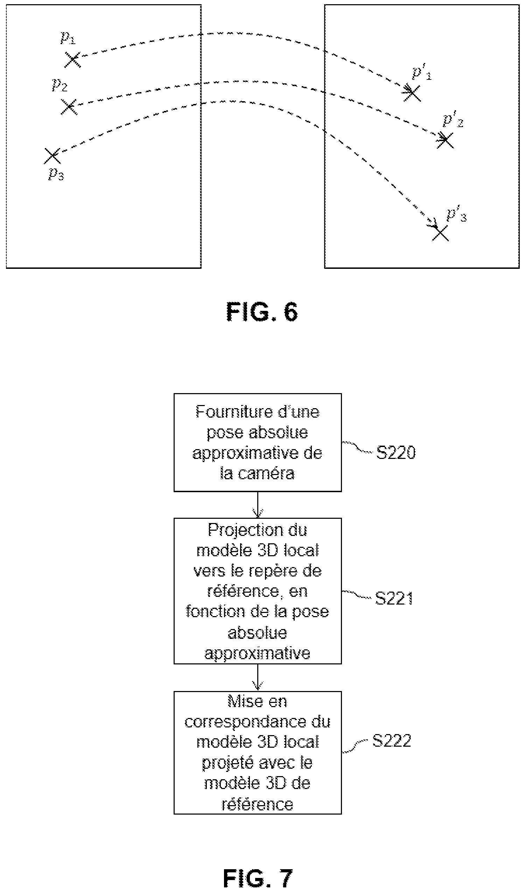

La figure 6 représente schématiquement deux images successives et, dans ces images, des pixels représentant les mêmes portions de la scène. Plus particulièrement, le pixel *p*₁ et le pixel *p'*₁ représentent la même portion de la scène, le pixel *p*₂ et le pixel *p'*₂ représentent la même portion de la scène, et le pixel *p*₃ et le pixel *p'*₃ représentent la même portion de la scène. Toutefois, la position du pixel *p*₁ dans l'image de gauche est différente de la position du pixel *p'*₁ dans l'image de droite (de même pour les pixels *p*₂ et *p'*₂, et pour les pixels *p*₃ et *p'*₃). La transformation de recalage vise à essayer de prédire, à partir de la position d'un pixel dans l'image cible, la position du pixel représentant la même portion de la scène dans l'autre image (ou inversement).

Dans certains cas, la transformation de recalage peut être déterminée en faisant des hypothèses simplificatrices notamment sur la géométrie de la scène. Par exemple, dans certains cas, la transformation de recalage correspond à une homographie. De manière connue en soi, une homographie modélise le mouvement en supposant que les portions de la scène représentées par les pixels sont situées dans un même plan, c'est-à-dire en supposant que la scène est globalement une surface plane. Une telle homographie peut être modélisée de manière simple et s'avère en outre suffisante dans de nombreux cas.

Rien n'exclut cependant, dans d'autres exemples, de modéliser différemment la géométrie approximative de la scène pour la détermination de la transformation de recalage. Il est à noter que cette modélisation de la géométrie approximative de la scène vise uniquement à établir la transformation de recalage qui est utilisée pour faciliter la mise en correspondance de pixels, et est donc distincte du modèle 3D local.

Suite à cette étape S2110, une transformation de recalage entre les deux images est déterminée.

La transformation de recalage est ensuite utilisée, au cours d'une étape S2111 suivante, pour recaler entre elles l'image cible et l'autre image, c'est-à-dire pour ramener l'image cible et l'autre image au plus près d'une même géométrie d'acquisition. L'apparence d'un élément de la scène dans une image varie selon le point de vue d'acquisition de cette image. Ce recalage permet donc d'obtenir une image cible qui ressemble davantage à l'autre image. Par exemple, l'image cible est ramenée au plus près de la géométrie d'acquisition de l'autre image, c'est-à-dire que l'image cible est utilisée pour prédire (en appliquant la transformation de recalage à l'image cible), une image prédite représentant la scène depuis le point de vue de l'autre image, qui ressemble donc davantage à cette autre image que l'image cible.

Au cours d'une étape S2112 suivante d'appariement dense, les images obtenues après recalage sont appariées pour permettre d'identifier tous les pixels pouvant être mis en correspondance entre eux. Un tel appariement dense peut être effectué selon toute méthode connue de la personne du métier. Par exemple, cet appariement peut mettre en œuvre un traitement par corrélation entre des vignettes de pixels de l'image cible et de l'image obtenues après recalage, ou un algorithme de flot optique dense. Après l'appariement dense, on obtient le résidu de déplacement entre l'image pré-compensée et l'image cible.

De manière générale, l'utilisation préalable de la transformation de recalage avant la mise en correspondance, pour préalablement recaler les images considérées, permet d'améliorer la robustesse et la précision de la mise en correspondance. Différents types de transformation de recalage peuvent être utilisés, pouvant notamment modéliser différemment la géométrie de la scène. L'utilisation d'une homographie présente toutefois l'avantage d'être simple à déterminer et à appliquer, tout en permettant d'obtenir de bons résultats dans de nombreux cas pour la mise en correspondance dense des pixels. Simplifier ainsi le problème d'appariement pixel à pixel permet l'utilisation d'algorithmes plus simples (donc moins chers à valider, qualifier et certifier), plus rapides, et plus à même de satisfaire les contraintes d'exécution temps réel indispensables pour un système embarqué.

Tel qu'illustré par la figure 3, lors de la détermination du modèle 3D local, l'étape S211 de mise en correspondance, de des pixels de l'image cible avec les pixels des autres images de la séquence est suivie d'une étape S212 de détermination d'une position 3D de chaque pixel de l'image cible, au moment de l'acquisition de l'image cible, dans le repère de la caméra 11. La détermination de la position 3D, par rapport à la caméra 11 au moment de l'acquisition de l'image cible, de chaque portion de la scène représentée par des pixels mis en correspondance entre eux dans des images différentes, prend en compte les poses relatives et les positions dans les images des différents pixels mis en correspondance entre eux. La détermination de la position 3D réalise par exemple une triangulation des pixels mis en correspondance entre eux, en déterminant la position 3D de la portion de scène considérée comme étant l'intersection des lignes de visée associées respectivement aux pixels mis en correspondance entre eux (ou du moins la position 3D à laquelle les lignes de visée se croisent sensiblement).

A l'issue de l'étape S212 de détermination de positions 3D, une pluralité de positions 3D de différentes portions de la scène, par rapport à la caméra 11 au moment de l'acquisition de l'image cible, ont été déterminées. Ces positions 3D des portions de la scène décrivent donc la géométrie 3D, dans le repère de la caméra 11, d'une partie de la scène telle que vue par ladite caméra 11 au moment de l'acquisition de l'image cible. Ces positions 3D des portions de la scène forment ainsi le modèle 3D local.

Tel qu'indiqué précédemment, la mise en correspondance effectuée au cours de l'étape S211 est une mise en correspondance dense, de sorte que le modèle 3D local obtenu représente la géométrie 3D de cette partie de la scène avec une résolution 2D de l'ordre de la résolution de l'image cible. Par exemple, le modèle 3D local peut se présenter sous la forme d'une image 2D constituée de pixels associés à des portions de mêmes dimensions (résolution) que les pixels de l'image cible. Toutefois, la valeur d'un pixel de l'image 2D du modèle 3D local représente la troisième dimension, par exemple sous la forme de la distance entre la caméra 11 et la portion de la scène représentée par ce pixel, tandis que la valeur d'un pixel de l'image cible représente une grandeur physique représentative du rayonnement électromagnétique issu de la portion de la scène représentée par ce pixel.

Tel qu'illustré par la figure 2, la détermination S21 du modèle 3D local est suivie d'une étape S22 de détermination de la pose absolue de la caméra 11 au moment de l'acquisition de l'image cible, par recalage en position et en attitude d'éléments du modèle 3D local avec le modèle 3D de référence prédéterminé de ladite scène.

Le modèle 3D de référence représente la géométrie 3D de la scène dans le repère de référence. Il s'agit donc d'une information a priori sur la scène, qui représente la géométrie 3D de la scène correctement orientée, positionnée et dimensionnée dans le repère de référence. Par exemple, le modèle 3D de référence correspond à un Modèle Numérique de Terrain (MNT) ou, de préférence, à un MNE correctement orienté, positionné et dimensionné dans le repère de référence (par exemple géoréférencé dans le cas d'une scène à la surface de la Terre). De manière connue en soi, un MNT représente la géométrie 3D du sol de la scène sans tenir compte des différents éléments situés au-dessus du sol (bâtiments, végétation, etc.), contrairement à un MNE qui représente la géométrie 3D de la scène en tenant compte des éléments situés au-dessus du sol.

Un tel modèle 3D de référence peut être préalablement établi selon toute méthode de cartographie 3D connue de la personne du métier, et le choix d'une méthode particulière ne constitue qu'une variante nullement limitative d'implémentation du procédé 20 de détermination de pose absolue.

Il est à noter que le modèle 3D de référence peut notamment être déterminé en appliquant les mêmes étapes que pour déterminer le modèle 3D local, en fonction d'une séquence d'images acquises par une caméra dont la position et l'attitude dans le repère de référence sont connues avec précision lors de l'acquisition de la séquence d'images (par exemple déterminées au moyen d'un récepteur GPS, etc.). Il est à noter que, dans certains cas, la caméra utilisée pour établir le modèle 3D de référence de la scène peut être la caméra 11 de l'engin 10. Par exemple, dans le cas où l'engin 10 effectue un trajet aller-retour survolant la même scène, et si l'engin 10 est équipé par exemple d'un récepteur GPS, il est possible de déterminer le modèle 3D de référence lors du trajet aller de l'engin 10, et d'utiliser le procédé 20 de détermination de pose absolue lors du trajet retour de l'engin 10, à des fins de navigation de l'engin 10, par exemple pour pallier une défaillance du récepteur GPS. En l'absence de capteur GPS, il reste possible de produire une carte non métrique permettant de rebrousser chemin.

Le modèle 3D de référence dépend de la scène et le dispositif de calcul 12 est donc configuré pour récupérer le modèle 3D de référence associé à la scène survolée, par exemple à partir d'une base de données qui peut être embarquée dans l'engin 10 spatial ou aérien, ou distante dudit engin 10. Par exemple, la base de données peut stocker un seul modèle 3D de référence établi spécifiquement pour une mission donnée de survol de la scène associée. Dans d'autres exemples, la base de données peut stocker plusieurs modèles 3D de référence associés respectivement à différentes scènes pouvant être survolées. Dans un tel cas, le dispositif de calcul 12 sélectionne et récupère le modèle 3D de référence à utiliser en fonction d'une information permettant d'identifier la scène qui doit être survolée par l'engin 10 (par exemple à partir de coordonnées approximatives de la scène ou de l'engin 10, etc.). Dans le cas décrit précédemment où l'engin 10 effectue un trajet aller-retour et établit le modèle 3D de référence sur le trajet aller, il suffit lors du trajet retour de récupérer dans la base de données le modèle 3D de référence qui vient d'être établi.

Le recalage en position et en attitude du modèle 3D local avec le modèle 3D de référence vise à recaler le modèle 3D local par rapport au modèle 3D de référence. Ce recalage est effectué en position et en attitude. Il est à noter que le recalage en position est effectué en trois dimensions (position 3D), c'est-à-dire que le recalage vise à retrouver non seulement l'endroit (position essentiellement 2D) au sein du modèle 3D de référence où se retrouve la géométrie 3D décrite par le modèle 3D local, mais également une orientation et un facteur d'échelle qui décrit le redimensionnement nécessaire pour faire correspondre localement le modèle 3D local avec le modèle 3D de référence. Le facteur d'échelle est induit par la distance entre la caméra 11 et la scène et permet donc de retrouver la composante d'altitude (troisième dimension) de la position 3D de la pose absolue à déterminer. Par exemple, le recalage s'effectue par un traitement de corrélation, de préférence par tuilage, entre le modèle 3D local et le modèle 3D de référence, ou selon toute méthode de recalage connue de la personne du métier, par exemple par une méthode de détection et de description d'éléments saillants, par une méthode de type « Iterative Closest Point » (ICP).

Etant donné que le modèle 3D de référence est établi dans le repère de référence, le fait de recaler le modèle 3D local par rapport au modèle 3D de référence permet de déterminer la pose absolue de la caméra 11 dans le repère de référence, au moment de l'acquisition de l'image cible, c'est-à-dire déterminer à la fois la position (3D) et l'attitude de la caméra 11 dans le repère de référence.

Tel qu'indiqué ci-dessus, le recalage en position et attitude du modèle 3D local par rapport au modèle 3D de référence vise à retrouver le modèle 3D local au sein du modèle de référence.

Dans certains cas, un tel recalage peut effectuer un balayage dans un domaine de recherche qui correspond à des plages de valeurs de recalage possibles pour la position (position 2D et facteur d'échelle) et l'attitude, afin d'identifier des valeurs de recalage qui permettent d'optimiser une fonction de ressemblance prédéterminée, représentative de la ressemblance entre le modèle 3D local (recalé selon les valeurs de recalage considérées) et le modèle 3D de référence. Par exemple, la fonction de ressemblance correspond à un traitement par corrélation entre le modèle 3D local (recalé selon les valeurs de recalage considérées) et le modèle 3D de référence.

Il est à noter que le facteur d'échelle peut, dans certains cas, être fourni par d'autres moyens, au moins de manière approximative. Par exemple, le facteur d'échelle peut être déterminé à partir de mesures fournies par une centrale inertielle de l'engin 10 (par exemple prédit à partir de ces mesures au moyen d'un filtre de navigation). Si le facteur d'échelle ainsi déterminé est considéré comme suffisamment précis, alors il n'est pas nécessaire de recaler davantage en échelle au cours de l'étape S22, par exemple il n'est pas nécessaire de réaliser un balayage dans une plage de valeurs possibles pour le facteur d'échelle. Dans le cas contraire, le facteur d'échelle approximatif peut par exemple être utilisé pour réduire le domaine de recherche du facteur d'échelle au cours de l'étape S22.

De manière générale, toute information a priori sur la pose absolue peut être utilisée pour réduire le domaine de recherche (et pour réduire la probabilité de fausse détection). Dans certains cas, il est possible d'obtenir une pose absolue approximative de la caméra 11 qui peut être utilisée pour réduire le domaine de recherche, et donc pour accélérer et améliorer le recalage du modèle 3D local avec le modèle 3D de référence. Par exemple, la pose absolue approximative pour l'image cible en cours peut être déterminée à partir de la pose absolue déterminée précédemment pour l'instant d'acquisition de l'image cible précédente et/ou à partir de mesures fournies par une centrale inertielle de l'engin 10. Dans un tel cas, l'étape S22 de détermination de la pose absolue de la caméra 11 vise à améliorer la précision de la pose absolue déterminée par rapport à la pose absolue approximative.

La figure 7 représente schématiquement les principales étapes d'un exemple de mise en œuvre de l'étape S22 de détermination de la pose absolue de la caméra 11 dans le repère de référence qui comporte:
- une étape S220 d'obtention d'une pose absolue approximative de la caméra 11 au moment de l'acquisition de l'image cible,
- une étape S221 de projection du modèle 3D local d'une partie de la scène au moment de l'acquisition de l'image cible vers le repère de référence, en fonction de la pose absolue approximative,
- une étape S222 de recalage, dans le repère de référence, du modèle 3D local projeté avec le modèle 3D de référence.

L'étape S221 de projection correspond essentiellement à un changement de repère (avec changement d'échelle), depuis le repère de la caméra 11 vers le repère de référence. Ce changement de repère s'effectue en fonction de la pose absolue approximative qui décrit approximativement la position (3D) et l'attitude du repère de la caméra 11 dans le repère de référence. En partant par exemple d'un modèle 3D local qui correspond à une image 2D décrivant les distances des différentes portions de la scène par rapport à la caméra 11, on obtient par exemple un modèle 3D local qui correspond à un MNE local (local en ce qu'il représente une partie de la scène représentée par le modèle 3D de référence) dans le repère de référence. L'étape S222 de recalage est effectuée sur un domaine de recherche réduit, limité à un voisinage de la pose absolue approximative obtenue au cours de l'étape précédente S220. Tel qu'indiqué ci-dessus, si le facteur d'échelle de la pose absolue approximative est considéré comme suffisamment précis, il n'est pas nécessaire de recaler davantage en échelle au cours de l'étape S222.

Dans des modes particuliers de mise en œuvre, le modèle 3D local (éventuellement après projection dans le repère de référence) et le modèle 3D de référence sont filtrés au moyen d'un filtre passe-haut avant d'être recaler en position et en attitude, pour déterminer la pose absolue de la caméra 11. De telles dispositions permettent de faciliter le recalage en position et en attitude entre le modèle 3D local et le modèle 3D de référence. Par exemple, dans le cas où le modèle 3D local et le modèle 3D de référence correspondent à des MNE, alors l'application du filtrage passe-haut permet de mettre en évidence les variations hautes fréquences de l'élévation qui correspondent par exemple à la présence de bâtiments dans la scène. De manière générale, les bâtiments, ou plus généralement les structures introduisant localement des variations rapides de l'élévation au sein de la scène, et leurs positions respectives sont importantes pour déterminer la pose absolue de la caméra 11, et sont en particulier plus pertinentes et plus facilement exploitables que des valeurs absolues de l'élévation. A contrario, les variations lentes de l'élévation au sein de la scène (par exemple la pente du sol sur lequel est construit un bâtiment) portent peu d'information. Les variations lentes de l'élévation au sein de la scène contiennent généralement l'essentiel de la différence entre les deux cartes dues aux erreurs d'alignement a priori puisque l'algorithme essaye par exemple d'abord de recaler la pente moyenne à l'aide d'une translation même si cette pente moyenne provient de l'erreur d'attitude a priori ou d'une dérive dans les poses utilisées pour la reconstruction 3D. Les variations lentes de l'élévation au sein de la scène peuvent en outre introduire un bruit plus important lors d'un traitement par corrélation du modèle 3D local avec le modèle 3D de référence. Par exemple, la résolution des variations rapides de l'élévation, à conserver, est de l'ordre du pixel dans le modèle 3D local (MNE) de la scène. Les paramètres du filtre passe-haut sont donc avantageusement sélectionnés pour conserver de telles variations rapides de l'élévation. Il n'est pas non plus nécessaire d'éliminer totalement les basses fréquences, cela permet de pouvoir recaler des collines ou d'autres structures naturelles de grande taille.

Pour l'application du filtre passe haut, il faut par exemple considérer ce qui est conservé, comme les bâtiments, mais aussi ce qui est supprimé par ce filtre passe haut. Le filtre passe-haut permet en effet de supprimer l'information 3D la moins bien reconstruite et qui perturbe particulièrement le plus le recalage.

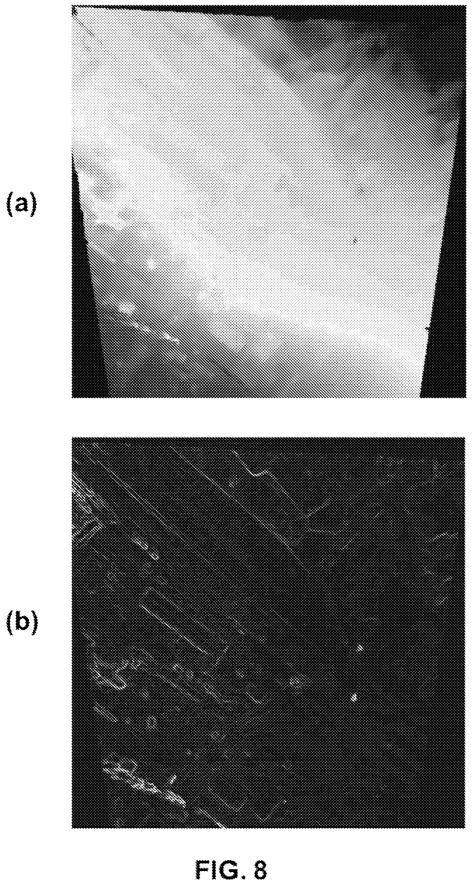

Par exemple, la figure 8 représente schématiquement un exemple de modèle 3D local (projeté dans le repère de référence au moyen d'une pose absolue approximative de la caméra 11) avant filtrage passe-haut (partie (a) de la figure 8) et après filtrage passe-haut (partie (b) de la figure 8). Dans l'exemple illustré par la figure 8, le modèle 3D local correspond à un MNE. Tel qu'illustré par la partie (a) de figure 8, l'élévation varie essentiellement avec la pente de la scène et les variations rapides de l'élévation de la scène sont parfois négligeables par rapport à l'élévation absolue. Sur la partie (b) de la figure 8, les variations rapides de l'élévation sont mises en évidence grâce au filtrage passe-haut et on voit que celles-ci portent davantage d'informations pour déterminer la pose absolue de la caméra. On comprend en effet que les variations rapides de l'élévation au sein d'une scène caractérisent davantage celle-ci (par exemple par rapport à une autre scène) que les variations lentes de l'élévation au sein de cette scène.

Un autre avantage du filtrage passe-haut réside dans le fait de supprimer les effets de bords. En effet, comme représenté sur la partie (a) de la figure 8, le modèle 3D local est seulement défini localement (les zones sur les bords à gauche, à droite et en haut de la partie (a) ne sont pas définies), ce qui introduit des discontinuités d'élévation sur les bords lors du recalade en position et attitude avec le modèle 3D de référence. Ces discontinuités, qui pourraient conduire à la présence d'artefacts lors d'une corrélation, sont supprimées par le filtrage passe-haut, comme illustré par la partie (b) de la figure 8.

La présente méthode utilise avantageusement la représentation 3D dense. En effet pour la navigation à vue, les éléments reconnaissables sont généralement petits vus du ciel (bâtiments, rues, arbres, routes) et donc notre approche dense permet de reconstruire les éléments saillants pertinents pour la mise en correspondance, à savoir les bords/murs des bâtiments, les dénivelés subtiles entre le centre et le bord des routes, les arbres.

De manière plus générale, il est à noter que les modes de mise en œuvre et de réalisation considérés ci-dessus ont été décrits à titre d'exemples non limitatifs, et que d'autres variantes sont par conséquent envisageables.

## Revendications

1. Procédé (20) temps réel mis en œuvre par ordinateur de détermination d'une pose absolue d'une caméra (11) dans un repère de référence, ladite caméra (11) étant monoculaire et passive, et étant embarquée dans un engin (10) aérien ou spatial mobile par rapport à une scène connue et cartographiée sous la forme d'un modèle 3D de référence, ledit procédé comportant :
- une obtention (S20) d'une séquence d'au moins deux images consécutives acquises par la caméra (11) à des instants respectifs consécutifs, chaque image comportant une pluralité de pixels, chaque pixel d'une image représentant partiellement la scène vue par la caméra au moment de l'acquisition de ladite image,
- une détermination (S21), à partir de la séquence d'images, d'un modèle 3D local dans un repère centré et orienté par rapport à la caméra (11), ledit modèle 3D local représentant une partie de la scène en trois dimensions correspondant à l'acquisition d'une image dite cible parmi la séquence d'images, la détermination (S21) du modèle 3D local comportant une mise en correspondance dense (S211) de tous les pixels de l'image cible avec des pixels d'autres images parmi ladite séquence,
- une fourniture (S220) d'une pose absolue approximative de la caméra,
- une détermination de la pose absolue de la caméra (11) au moment de l'acquisition de l'image cible, par recalage en position et en attitude du modèle 3D local avec le modèle 3D de référence, le recalage en position et en attitude étant réalisé dans un domaine de recherche, à partir de la pose absolue approximative de la caméra.

2. Procédé (20) selon la revendication 1, dans lequel la détermination du modèle 3D local comprend une détermination d'au moins une pose relative de la caméra pour plusieurs images consécutives de la séquence.

3. Procédé (20) selon la revendication 2, dans lequel la détermination de ladite pose relative de la caméra pour lesdites plusieurs images consécutives de la séquence comportant une odométrie visuelle (S2100), suivie d'une actualisation (S2101) de ladite pose relative par ajustement de faisceaux.

4. Procédé (20) selon la revendication 2 ou 3, dans lequel la détermination (S21) du modèle 3D local comporte :
- la détermination (S210) de poses relatives de la caméra (11) pour lesdites plusieurs images consécutives de la séquence , suivie de
- ladite mise en correspondance dense (S211) de tous les pixels de l'image cible avec des pixels desdites plusieurs images consécutives de la séquence,
- pour chaque pixel de l'image cible effectivement mis en correspondance: une détermination (S212) d'une position 3D du pixel de l'image cible, dans le repère de la caméra, en fonction des poses relatives, de la position 2D dudit pixel dans l'image cible et des positions 2D de chaque pixel mis en correspondance,
dans lequel le modèle 3D local est formé à partir des positions 3D des pixels effectivement mis en correspondance de l'image cible.

5. Procédé (20) selon la revendication 4, dans lequel la mise en correspondance dense (S211) des pixels de l'image cible avec les pixels des autres images consécutives de la séquence comporte, pour chaque autre image parmi les autres images consécutives de la séquence :
- une détermination (S2110), à partir des poses relatives respectives, d'une transformation de recalage entre l'image cible et ladite autre image,
- un recalage (S2111), au moyen de la transformation de recalage, de ladite autre image,
- une détermination du résidu de mouvement (S2112) de l'image cible vers ladite autre image recalée.

6. Procédé (20) selon la revendication 5, dans lequel la transformation de recalage est une homographie.

7. Procédé (20) selon la revendication 5 ou 6, dans lequel la détermination du résidu de mouvement de l'image cible et de ladite autre image recalée met en œuvre un algorithme de flot optique dense.

8. Procédé (20) selon l'une quelconque des revendications précédentes, dans lequel la détermination (S22) de la pose absolue de la caméra (11) au moment de l'acquisition de l'image cible comporte :
- une projection (S221) du modèle 3D local vers le repère de référence, en fonction de la pose absolue approximative,
- une mise en correspondance (S222), dans le repère de référence, du modèle 3D local projeté avec le modèle 3D de référence.

9. Procédé (20) selon l'une quelconque des revendications précédentes, dans lequel la pose absolue approximative est déterminée à partir d'une pose absolue déterminée pour la caméra (11) lors d'une acquisition d'une image cible précédente ou à partir d'un instrument de navigation embarqué dans l'engin aérien ou spatial.

10. Procédé (20) selon l'une quelconque des revendications précédentes, dans lequel le modèle 3D local et le modèle 3D de référence sont filtrés au moyen d'un filtre passe-haut avant de déterminer la pose absolue de la caméra (11).

11. Procédé (20) selon l'une quelconque des revendications précédentes, dans lequel les images de la séquence d'images obtenues correspondent à des images dites clés sélectionnées parmi une séquence glissante d'images dites initiales acquises successivement par la caméra.

12. Procédé (20) selon la revendication 11, dans lequel une image initiale est sélectionnée en tant qu'image clé lorsqu'un critère prédéterminé de déplacement de l'engin (10) aérien ou spatial depuis l'acquisition de l'image clé précédente est vérifié.

13. Procédé temps réel de navigation à vue utilisant une caméra (11) monoculaire et passive et reliée à une plateforme d'un engin (10) aérien ou spatial mobile par rapport à une scène connue et cartographiée sous la forme d'un modèle 3D de référence, comprenant ;
- une détermination d'une pose absolue de la caméra (11) dans le repère de référence selon l'une des revendications 1 à 12, puis
- une détermination des position et attitude de l'engin aérien ou spatial, dans le modèle 3D de référence, en fonction de la pose absolue modifiée en fonction d'une position de la caméra par rapport à la plateforme de l'engin aérien ou spatial.

14. Produit programme d'ordinateur comportant des instructions qui, lorsqu'elles sont exécutées par au moins un processeur, configurent ledit au moins un processeur pour mettre en œuvre un procédé selon l'une quelconque des revendications 1 à 13.

15. Dispositif de calcul (12) comportant au moins un processeur et au moins une mémoire, ledit au moins processeur étant configuré pour mettre en œuvre un procédé selon l'une quelconque des revendications 1 à 13.

16. Engin (10) aérien ou spatial, comportant une plateforme portant une caméra (11) et un dispositif de calcul (12) selon la revendication 15.

## Patentansprüche

1. Von einem Computer durchgeführtes Echtzeit-Verfahren (20) zur Bestimmung einer absoluten Lage einer Kamera (11) in einem Referenzbezugssystem, wobei die Kamera (11) einäugig und passiv ist und sich an Bord eines Luft- oder Raumfahrzeugs (10) befindet, das bezüglich einer bekannten und in Form eines 3D-Referenzmodells kartographierten Szene mobil ist, wobei das Verfahren aufweist:
- ein Abrufen (S20) einer Sequenz von mindestens zwei aufeinanderfolgenden Bildern, die von der Kamera (11) zu jeweiligen aufeinanderfolgenden Zeitpunkten erfasst worden sind, wobei jedes Bild mehrere Pixel aufweist, wobei jedes Pixel eines Bilds teilweise die Szene repräsentiert, die von der Kamera zum Zeitpunkt der Erfassung des Bilds gesehen wird,
- eine von der Bildsequenz ausgehende Bestimmung (S21) eines lokalen 3D-Modells in einem bezüglich der Kamera (11) zentrierten und orientierten Bezugssystem, wobei das lokale 3D-Modell einen Teil der Szene in drei Dimensionen repräsentiert, die der Erfassung eines sogenannten Zielbilds der Bildsequenz entspricht, wobei die Bestimmung (S21) des lokalen 3D-Modells ein dichtes In-Übereinstimmung-Bringen (S211) aller Pixel des Zielbilds mit Pixeln anderer Bilder der Sequenz aufweist,
- eine Bereitstellung (S220) einer ungefähren absoluten Lage der Kamera,
- eine Bestimmung der absoluten Lage der Kamera (11) zum Zeitpunkt der Erfassung des Zielbilds durch Neubestimmen von Position und Orientierung des lokalen 3D-Modells mit dem 3D-Referenzmodell, wobei das Neubestimmen in einem Suchgebiet ausgehend von der ungefähren absoluten Lage der Kamera durchgeführt wird.

2. Verfahren (20) nach Anspruch 1, in welchem die Bestimmung des lokalen 3D-Modells aufweist: eine Bestimmung mindestens einer relativen Lage der Kamera für mehrere aufeinanderfolgende Bilder der Sequenz.

3. Verfahren (20) nach Anspruch 2, in welchem die Bestimmung der relativen Lage der Kamera für die mehreren aufeinanderfolgenden Bilder der Sequenz aufweist: eine visuelle Odometrie (S2100), gefolgt von einer Aktualisierung (S2101) der relativen Lage durch Anpassung von Strahlenbündel.

4. Verfahren (20) nach Anspruch 2 oder 3, in welchem die Bestimmung (S21) des lokalen 3D-Modells aufweist:
- die Bestimmung (S210) von relativen Lagen der Kamera (11) für die mehreren aufeinanderfolgenden Bilder der Sequenz, in Anschluss daran
- das dichte In-Übereinstimmung-Bringen (S211) aller Pixel des Zielbilds mit Pixeln der mehreren aufeinanderfolgenden Bilder der Sequenz,
- für jedes tatsächlich in Übereinstimmung gebrachte Pixel des Zielbilds: eine Bestimmung (S212) einer 3D-Position des Pixels des Zielbilds in dem Bezugssystem der Kamera als Funktion der relativen Lagen, der 2D-Position des Pixels in dem Zielbild und der 2D-Positionen jedes in Übereinstimmung gebrachten Pixels,
in welchem das lokale 3D-Modell ausgehend von den 3D-Positionen der tatsächlich in Übereinstimmung gebrachten Pixel des Zielbilds gebildet wird.

5. Verfahren (20) nach Anspruch 4, in welchem das dichte In-Übereinstimmung-Bringen (S211) der Pixel des Zielbilds mit den Pixeln anderer aufeinanderfolgender Bilder der Sequenz für jedes andere Bild der anderen aufeinanderfolgenden Bilder der Sequenz aufweist:
- eine Bestimmung (S2110) einer Umpositionierung/ Umorientierung-Transformation zwischen dem Zielbild und dem anderen Bild anhand der jeweiligen relativen Lagen,
- eine Neubestimmung (S211) des anderen Bilds mithilfe der Neubestimmungs-Transformation,
- eine Bestimmung des Bewegungsrests (S2112) des Zielbilds in Bezug auf das neubestimmte andere Bild.

6. Verfahren (20) nach Anspruch 5, in welchem die Neubestimmungs-Transformation eine Homographie ist.

7. Verfahren (20) nach Anspruch 5 oder 6, in welchem die Bestimmung des Bewegungsrests des Zielbilds in Bezug auf das neubestimmte andere Bild einen dichten optischen Algorithmusfluss durchführt.

8. Verfahren (20) nach einem der vorstehenden Ansprüche, in welchem die Bestimmung (S22) der absoluten Lage der Kamera (11) zum Zeitpunkt der Erfassung des Zielbilds aufweist:
- eine Projektion (S221) des lokalen 3D-Modells auf das Referenzbezugssystem als Funktion der ungefähren absoluten Lage,
- ein In-Übereinstimmung-Bringen (S222) des projizierten lokalen 3D-Modells mit dem 3D-Referenzmodell in dem Referenzbezugssystem.

9. Verfahren (20) nach einem der vorstehenden Ansprüche, in welchem die ungefähre absolute Lage ausgehend von einer absoluten Lage, die für die Kamera (11) bei einer Erfassung eines vorherigen Zielbilds bestimmt worden ist, oder mithilfe eines Navigationsinstruments, das sich an Bord des Luft- oder Raumfahrzeugs befindet, bestimmt wird.

10. Verfahren (20) nach einem der vorstehenden Ansprüche, in welchem das lokale 3D-Modell und das 3D-Referenzmodell mithilfe eines Hochpassfilters gefiltert werden, bevor die absolute Lage der Kamera (11) bestimmt wird.

11. Verfahren (20) nach einem der vorstehenden Ansprüche, in welchem die abgerufenen Bilder der Bildsequenz sogenannten Schlüsselbildern entsprechen, die aus einer gleitenden Sequenz sogenannter Anfangsbilder, die nacheinander von der Kamera erfasst werden, ausgewählt werden.

12. Verfahren (20) nach Anspruch 11, in welchem ein Anfangsbild als ein Schlüsselbild ausgewählt wird, wenn ein vorgegebenes Kriterium, das sich auf Fortbewegung des Luft- oder Raumfahrzeugs (10) seit der Erfassung des vorherigen Schlüsselbilds bezieht, verifiziert worden ist.

13. Echtzeit-Verfahren für Sichtnavigation unter Verwendung einer einäugigen und passiven Kamera (11), die mit einer Plattform eines Luft- oder Raumfahrzeugs (10) verbunden ist, das bezüglich einer bekannten und in Form eines 3D-Referenzmodells kartographierten Szene mobil ist, aufweisend:
- eine Bestimmung einer absoluten Lage der Kamera (11) in dem Referenzbezugssystem nach einem der Ansprüche 1 bis 12, dann
- eine Bestimmung der Position und Orientierung des Luft- oder Raumfahrzeugs in dem 3D-Referenzmodell als Funktion der absoluten Lage, die als Funktion einer Position der Kamera bezüglich der Plattform des Luft- oder Raumfahrzeugs modifiziert ist.

14. Computerprogrammprodukt aufweisend Befehle, die, wenn sie von mindestens einem Prozessor ausgeführt werden, den mindestens einen Prozessor konfigurieren, ein Verfahren nach einem der Ansprüche 1 bis 13 durchzuführen.

15. Rechnervorrichtung (12) aufweisend mindestens einen Prozessor und mindestens einen Speicher, wobei der mindestens eine Prozessor konfiguriert ist, ein Verfahren nach einem der Ansprüche 1 bis 13 durchzuführen.

16. Luft- oder Raumfahrzeug (10), aufweisend eine Plattform, die eine Kamera (11) trägt, und eine Rechnervorrichtung (12) nach Anspruch 15.

## Claims

1. Computer-implemented real-time method (20) for determining an absolute pose of a camera (11) in a reference coordinate system, said camera (11) being monocular and passive and being located on board an aircraft or spacecraft (10) that is able to move relative to a scene known and mapped in the form of a reference 3D model, said method comprising:
- obtaining (S20) a sequence of at least two successive images captured by the camera (11) at respective successive times, each image comprising a plurality of pixels, each pixel of an image partially representing the scene viewed by the camera at the time of capture of said image,
- determining (S21), from the sequence of images, a local 3D model in a coordinate system that is centered and oriented relative to the camera (11), said local 3D model representing a portion of the scene in three dimensions corresponding to the capture of an image, referred to as target image, among the sequence of images, the determination (S21) of the local 3D model comprising a dense matching (S211) of all pixels of the target image with pixels of other images among said sequence,
- providing (S220) an approximate absolute pose of the camera,
- determining the absolute pose of the camera (11) at the time of capture of the target image, by realigning the position and attitude of the local 3D model with the reference 3D model, the position and attitude realignment being carried out in a search domain, based on the approximate absolute pose of the camera.

2. Method (20) according to claim 1, wherein the determination of the local 3D model comprises determining at least one relative pose of the camera for several successive images in the sequence.

3. Method (20) according to claim 2, wherein the determination of said relative pose of the camera for said several successive images in the sequence comprises visual odometry (S2100), followed by updating (S2101) said relative pose by beam adjustment.

4. Method (20) according to claim 2 or 3, wherein the determination (S21) of the local 3D model comprises:
- determining (S210) relative poses of the camera (11) for said several successive images in the sequence, followed by
- dense matching (S211) of all pixels of the target image with pixels of said several successive images in the sequence,
- for each pixel of the target image actually matched: determining (S212) a 3D position of the pixel of the target image, in the coordinate system of the camera, based on the relative poses, the 2D position of said pixel in the target image, and the 2D positions of each matched pixel,
wherein the local 3D model is formed based on the 3D positions of the pixels actually matched in the target image.

5. Method (20) according to claim 4, wherein the dense matching (S211) of the pixels of the target image with pixels of the other successive images in the sequence comprises, for each other image among the other successive images in the sequence:
- determining (S2110), based on the respective relative poses, a realignment transformation between the target image and said other image,
- realigning (S2111) said other image by means of the realignment transformation,
- determining the residual motion (S2112) from the target image to the realigned other image.

6. Method (20) according to claim 5, wherein the realignment transformation is a homography.

7. Method (20) according to claim 5 or 6, wherein the determination of the residual motion of the target image and of the realigned other image makes use of a dense optical flow algorithm.

8. Method (20) according to any one of the preceding claims, wherein the determination (S22) of the absolute pose of the camera (11) at the time of capture of the target image comprises:
- projecting (S221) the local 3D model into the reference coordinate system, based on the approximate absolute pose,
- matching (S222) the projected local 3D model with the reference 3D model, in the reference coordinate system.

9. Method (20) according to any one of the preceding claims, wherein the approximate absolute pose is determined based on an absolute pose determined for the camera (11) during the capture of a previous target image or based on a navigation instrument on board the aircraft or spacecraft.

10. Method (20) according to any one of the preceding claims, wherein the local 3D model and the reference 3D model are filtered using a high-pass filter before determining the absolute pose of the camera (11).

11. Method (20) according to any one of the preceding claims, wherein the images in the sequence of images that are obtained correspond to images, referred to as key images, selected from a sliding sequence of images, referred to as initial images, captured successively by the camera.

12. Method (20) according to claim 11, wherein an initial image is selected as a key image when a predetermined criterion of movement of the aircraft or spacecraft (10) since the capture of the previous key image is satisfied.

13. Real-time method for vision-based navigation using a monocular and passive camera (11) connected to a platform of an aircraft or spacecraft (10) that is able to move relative to a scene known and mapped in the form of a reference 3D model, which comprises:
- determining an absolute pose of the camera (11) in the reference coordinate system, according to one of claims 1 to 12, then
- determining the position and attitude of the aircraft or spacecraft, in the reference 3D model, based on the absolute pose modified according to a position of the camera relative to the platform of the aircraft or spacecraft.

14. Computer program product comprising instructions which, when executed by at least one processor, configure said at least one processor to implement a method according to any one of claims 1 to 13.

15. Computing device (12) comprising at least one processor and at least one memory, said at least one processor being configured to implement a method according to any one of claims 1 to 13.

16. Aircraft or spacecraft (10), comprising a platform carrying a camera (11) and a computing device (12) according to claim 15.
